# FASCICULE DE BREVET EUROPEEN

(11) **EP 0 687 830 B1**
(45) Date de publication et mention de la délivrance du brevet: **05.11.1997**
(21) Numéro de dépôt: 95401369.4
(22) Date de dépôt: 13.06.1995
(51) Int. Cl.: F16F 1/387

(54) **Articulation élastique autobraqueuse, en particulier pour bras-support de roue oscillant**
Elastisches Kippgelenk, insbesondere für eine Einarmschwinge von Rädern
Elastic bending articulation, especially for a support arm of a wheel

(30) Priorité: 15.06.1994 FR 9407312
(43) Date de publication de la demande: 20.12.1995
(73) Titulaire: HUTCHINSON, F-75008 Paris (FR)
(72) Inventeur: Brunerye, Philippe, F-18100 Vierzon (FR)
(74) Mandataire: Picard, Jean-Claude Georges

(56) Documents cités:
- EP-A- 0 147 662
- EP-A- 0 499 996
- DE-A- 3 240 981
- DE-A- 4 126 184
- DE-C- 3 223 752

## Description

La présente invention concerne une articulation élastique autobraqueuse, en particulier pour bras-support de roue oscillant, comportant un noyau central propre à être solidarisé du châssis d'un véhicule automobile, et une enveloppe extérieure coaxiale sur laquelle l'extrémité, opposée à la roue, du bras-support, peut être calée, un bloc de matière élastique étant adhérisé sur et entre les surfaces en regard dudit noyau et de ladite enveloppe, dans la zone centrale de l'espace séparant ces surfaces, articulation dans laquelle ledit bloc de matière élastique présente dans un plan axial deux branches parallèles ou pratiquement parallèles inclinées sur l'axe commun de l'articulation, et reliant lesdites surfaces en regard du noyau et de l'enveloppe.

Par la dénomination "articulation élastique autobraqueuse", on entend désigner une articulation dans laquelle l'enveloppe extérieure est sollicitée élastiquement en direction radiale (dans un plan axial déterminé de l'articulation) lorsque - dans les virages - des efforts axiaux s'exercent, dans un sens ou dans l'autre, sur la roue et par suite entre le noyau central et l'enveloppe, ceci pour conférer un certain effet autobraqueur à la roue.

Une telle articulation est déjà connue par le document EP 0 147 662. Dans une telle articulation, les branches peuvent subir des déformations importantes, ce qui cause une fatigue du caoutchouc. Il convient de limiter ces déformations sans nuire à l'efficacité de l'effet d'autobraquage.

Pour parvenir à ce résultat, une articulation du type général susdéfini est caractérisée, conformément à la présente invention, en ce que, pour chacune des branches parallèles mentionnées plus haut, une butée est prévue sur la surface intérieure de ladite enveloppe, du côté où cette branche forme un angle obtus avec ladite surface.

De la sorte, et comme on le comprendra mieux en regardant le dessin, une poussée axiale s'exerçant entre le noyau central et l'enveloppe extérieure se traduira par une déformation du bloc de matière élastique en direction axiale, du fait de son arc-boutement sur l'une des butées, d'où résultera un effort radial relatif, dans le plan axial concerné, entre le noyau intérieur et l'enveloppe extérieure de l'articulation, les deux branches du bloc de matière élastique se redressant pour tendre à prendre une position plus radiale. Ainsi, si le noyau central est fixe en direction radiale, l'enveloppe extérieure se déplacera radialement en cas d'effort axial s'exerçant sur le noyau, ce qui correspond à l'effet recherché.

Avantageusement, ladite matière élastique est soumise à une précontrainte dans la zone de chacun desdits angles obtus, ce qui est facilement réalisable avant le montage de l'articulation sur le véhicule, puisque ces précontraintes exerceront sur le noyau central deux efforts axiaux et opposés. Cette précontrainte de la matière élastique augmentera l'effet d'autobraquage, puisqu'un déplacement axial relatif entre le noyau central et l'enveloppe extérieure libérera alors des efforts radiaux plus importants que s'il n'y avait pas de précontrainte. En outre, cette précontrainte présente l'avantage de conférer à l'articulation une endurance plus grande.

Avantageusement encore, lesdites butées sont formées chacune sur une bague rigide calée intérieurement à l'une et à l'autre des extrémités de ladite enveloppe extérieure, par rétreint d'une extrémité de celle-ci ou par une liaison mécanique.

Ainsi, il est possible de faire en sorte que lesdites bagues entourent avec jeu les deux extrémités du noyau central, créant des butées radiales vis-à-vis des déplacements radiaux relatifs entre le noyau central et l'enveloppe extérieure au moins dans le plan axial précité.

Selon une autre caractéristique possible de la présente invention, dans le plan axial perpendiculaire au plan axial premier cité, ledit noyau central présente deux épaulements propres à coopérer avec lesdites bagues pour constituer des butées vis-à-vis des déplacements axiaux relatifs entre le noyau central et l'enveloppe extérieure.

En variante on pourrait aussi prévoir que lesdites bagues présentent, extérieurement à ladite enveloppe, des saillies axiales propres à constituer, avec les parois d'un logement dudit noyau central, des butées vis-à-vis des déplacements axiaux relatifs entre le noyau central et l'enveloppe extérieure.

Selon encore une autre variante de l'invention, permettant d'augmenter si nécessaire l'effet d'autobraquage, on peut prévoir que lesdites branches inclinées du bloc de matière élastique prennent appui chacune sur une base inclinée dudit noyau central, s'étendant globalement dans le plan axial premier cité, dans une direction transversale par rapport à la direction générale desdites branches.

Deux modes d'exécution de l'invention vont maintenant être décrits à titre d'exemples nullement limitatifs, avec référence aux figures du dessin ci-annexé dans lequel:
- la figure 1 est une vue en coupe axiale, selon le plan axial premier cité, d'une articulation élastique conforme à l'invention ;
- la figure 2 est la vue correspondante en bout ;
- la figure 3 est une vue en coupe axiale selon un plan perpendiculaire au plan axial premier cité ;

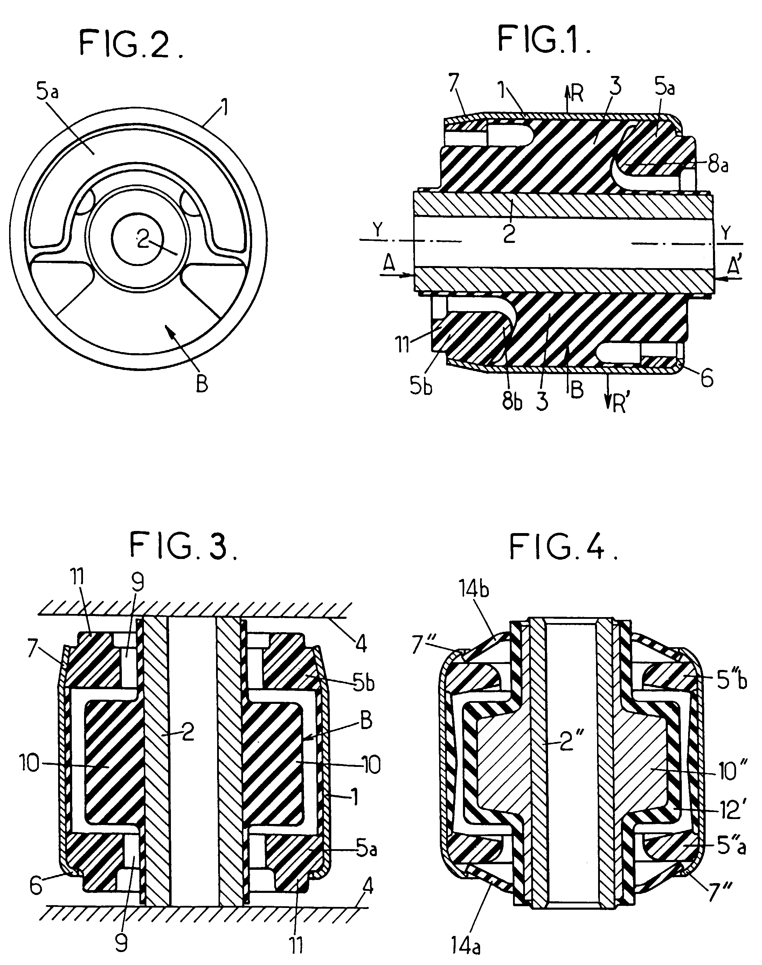

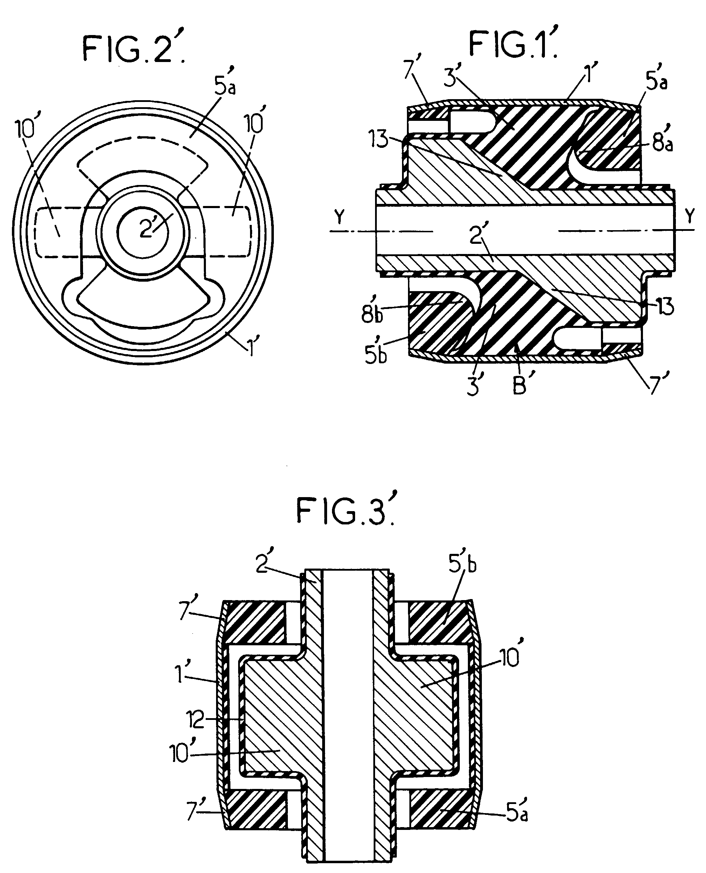

- les figures 1', 2' et 3' sont les vues correspondantes d'une variante d'articulation ; et
- la figure 4 est une vue en coupe axiale analogue à celle de la figure 3' et montrant une variante de l'articulation.

Dans les figures 1 à 3, l'enveloppe extérieure, le noyau central et le bloc de matière élastique ont été référencés respectivement 1, 2 et B. Dans ce premier mode de réalisation, le noyau 2 est constitué d'un simple tube cylindrique, en métal, dont les extrémités font saillie sur les extrémités du bloc B, de sorte qu'il puisse être bloqué en bout dans un logement approprié 4-4 du châssis d'un véhicule automobile.

Dans le plan axial de la figure 1, le bloc B présente deux branches parallèles 3 inclinées sur l'axe commun Y-Y de l'articulation, tube 2 et enveloppe 1 étant coaxiaux. Bien entendu, ces branches sont adhérisées d'une part extérieurement au tube 2, d'autre part intérieurement sur l'enveloppe 1. Dans les deux extrémités de cette enveloppe sont montées deux bagues de butée référencées 5a et 5b. La bague 5a est simplement retenue axialement dans l'enveloppe extérieure 1 par un rebord périphérique 6 de cette dernière, tandis que la périphérie de la bague opposée 5b est enserrée par l'extrémité rétreinte 7 de l'enveloppe 1. Le montage est réalisé de telle manière que la matière élastique des branches 3 soit précontrainte axialement contre une butée 8a, 8b prévue respectivement sur la bague 5a et sur la bague 5b.

Comme on le voit bien sur la figure 1, chaque butée 8a, 8b est prévue du côté où la branche 3 correspondante forme un angle obtus avec la surface interne de l'enveloppe 1.

Avec une telle articulation, on conçoit que des efforts axiaux (flèche A) agissant par exemple sur le noyau central 2 donnent naissance à des efforts radiaux (flèche R) sur l'enveloppe extérieure 1, ce qui fournit l'effet d'autobraquage recherché, étant entendu que des efforts axiaux opposés (flèche A' ) donneraient naissance à des efforts radiaux opposés (flèche R') sur l'enveloppe 1.

Le fait que les deux bagues de butée 5a et 5b entourent les extrémités du tube central 2 avec un jeu réduit (en 9) fournit, en direction radiale, une butée limitant les déplacements radiaux relatifs entre le tube central 2 et l'enveloppe extérieure 1.

Quant à la butée axiale destinée à limiter les déplacements axiaux relatifs entre l'enveloppe et le noyau, elle est fournie à la fois par des épaulements 10 du bloc de matière élastique B, pouvant venir buter par leurs extrémités sur les surfaces radiales internes des bagues 5a ou 5b, et par des butées en saillie 11 de ces mêmes bagues sur les surfaces internes correspondantes du logement 4 recevant le noyau central 2.

Dans le mode de réalisation décrit à titre de variante avec référence aux figures 1', 2' et 3', les épaulements précités 10 du bloc de matière élastique B sont remplacés par des épaulements 10' faisant partie du noyau central 2'. Ces épaulements 10', simplement enrobés (référence 12) par la matière élastique du bloc B', peuvent coopérer de la même façon que décrit plus haut avec les surfaces radiales internes de bagues de butée 5'b et 5'a maintenues aux extrémités de l'enveloppe extérieure 1' par deux parties rétreintes 7', ceci pour limiter là également les déplacements axiaux relatifs entre le noyau central 2' et l'enveloppe extérieure 1'.

La limitation des déplacements radiaux relatifs entre ces deux éléments s'effectue comme dans le mode de réalisation précédemment décrit.

Une autre différence avec le mode de réalisation précédent réside dans le fait que les branches 3' du bloc de matière élastique B', là encore parallèles l'une à l'autre et inclinées sur l'axe commun Y-Y de l'articulation, prennent appui chacune sur une base inclinée 13 du noyau central 2', cette disposition permettant d'augmenter légèrement l'effet d'autobraquage requis.

Cependant, le fonctionnement d'une telle articulation élastique reste globalement le même que celui de l'articulation des figures 1 à 3, les branches 3' s'arc-boutant sur l'une ou l'autre des butées 8'a et 8'b que comportent respectivement les bagues de butée précitées 5'a et 5'b, selon que les efforts axiaux relatifs entre le noyau central 2' et l'enveloppe extérieure 1' s'exercent dans un sens ou dans l'autre.

Dans l'un et l'autre des modes de réalisation susindiqués, le noyau central peut être en métal léger tel que l'aluminium, tandis que l'enveloppe extérieure peut être en tôle d'acier. Le bloc de matière élastique b ou b' sera avantageusement en caoutchouc naturel ou synthétique et les bagues de butée par exemple en polyamide.

Dans la vue en coupe axiale de la figure 4 on a représenté une articulation qui diffère de celle des figures 1' à 3' par quatre particularités : le sertissage des deux parties rétreintes référencées ici en 7'' est augmenté, ce qui permet de diminuer l'encombrement axial de l'articulation ; entre ces parties rétreintes et les bagues de butée 5''a et 5''b sont insérées deux rondelles d'étanchéité en caoutchouc 14a, 14b, engagées sur les extrémités du noyau central 2'' et empêchant que des saletés ne pénètrent à l'intérieur de l'articulation ; les épaulements 10'' du noyau central sont inclinés sur l'axe au lieu de lui être perpendiculaires, ce qui permet d'augmenter l'épaisseur de leur enrobage en caoutchouc (en 12') et de donner une certaine courbure à la réponse de l'amortissement en butée ; enfin le noyau central 2'' n'est pas monobloc comme dans le cas des figures 1' à 3', mais est constitué d'un tube d'acier engagé dans la pièce à épaulements 10", qui peut être en un autre métal, par exemple en aluminium.

## Revendications

1. Articulation élastique autobraqueuse, en particulier pour bras-support de roue oscillant, comportant un noyau central (2 ; 2') propre à être solidarisé du châssis (4) d'un véhicule automobile, et une enveloppe extérieure (1 ; 1') coaxiale sur laquelle l'extrémité, opposée à la roue, du bras-support, peut être calée, un bloc de matière élastique (B ; B') étant adhérisé sur et entre les surfaces en regard dudit noyau et de ladite enveloppe, dans la zone centrale de l'espace séparant ces surfaces, dans laquelle ledit bloc de matière élastique (B ; B') présente dans un plan axial deux branches parallèles ou pratiquement parallèles (3 ; 3') inclinées sur l'axe commun (Y-Y) de l'articulation, et reliant lesdites surfaces en regard du noyau et de l'enveloppe, caractérisée en ce que, pour chacune de ces branches, une butée (8a, 8b ; 8'a, 8'b) est prévue sur la surface intérieure de ladite enveloppe, du côté où cette branche (3 ; 3') forme un angle obtus avec ladite surface.

2. Articulation selon la revendication 1, caractérisée en ce que ladite matière élastique (B ; B') est soumise à une précontrainte dans la zone de chacun desdits angles obtus.

3. Articulation selon la revendication 1 ou 2, caractérisée en ce que lesdites butées (8a, 8b ; 8'a, 8'b) sont formées chacune sur une bague rigide (5a, 5b ; 5'a, 5'b) calée intérieurement à l'une et à l'autre des extrémités de ladite enveloppe extérieure (1 ; 1').

4. Articulation selon la revendication 3, caractérisée en ce qu'au moins l'une desdites bagues (5a, 5b ; 5'a, 5'b) est calée dans l'enveloppe (1 ; 1') par rétreint (7 ; 7') d'une extrémité de celle-ci ou par une liaison mécanique.

5. Articulation selon la revendication 3 ou 4, caractérisée en ce que lesdites bagues (5a, 5b ; 5'a, 5'b) entourent avec jeu (9) les deux extrémités du noyau central (2 ; 2'), créant ainsi des butées radiales vis-à-vis des déplacements radiaux relatifs entre le noyau central (2 ; 2') et l'enveloppe extérieure (1 ; 1') dans le plan axial précité.

6. Articulation selon l'une quelconque des revendications 3 à 5, caractérisée en ce que dans le plan axial perpendiculaire au plan axial premier cité, ledit noyau central (2') présente deux épaulements (10') propres à coopérer avec lesdites bagues (5'a, 5'b) pour constituer des butées vis-à-vis des déplacements axiaux relatifs entre le noyau central (2') et l'enveloppe extérieure (1').

7. Articulation selon l'une quelconque des revendications 3 à 5, caractérisée en ce que lesdites bagues (5a, 5b) présentent, extérieurement à ladite enveloppe, des saillies axiales (11) propres à constituer, avec les parois d'un logement (4) dudit noyau central (2), des butées vis-à-vis des déplacements axiaux relatifs entre le noyau central (2) et l'enveloppe extérieure (1).

8. Articulation selon l'une quelconque des revendications précédentes, caractérisée en ce que lesdites branches inclinées (3') du bloc de matière élastique (B') prennent appui chacune sur une base inclinée (13) dudit noyau central (2'), s'étendant globalement dans le plan axial premier cité, dans une direction transversale par rapport à la direction générale desdites branches (3').

9. Articulation selon l'une quelconque des revendications 6 à 8, caractérisée en ce que le noyau central (2") est constitué d'un tube engagé dans une pièce comportant des épaulements (10"), lesquels sont inclinés sur l'axe de l'articulation de sorte à permettre d'augmenter l'épaisseur du revêtement (12') de caoutchouc.

10. Articulation selon l'une quelconque des revendications précédentes, caractérisée en ce que ses extrémités sont obturées par deux rondelles de caoutchouc (14a, 14b) insérées entre les parties rétreintes (7") et les bagues de butée (5"a, 5"b), ces rondelles étant engagées sur les extrémités du noyau central (2").

## Patentansprüche

1. Elastisches Gelenk zum automatischen Lenkungseinschlag, insbesondere für einen Stützarm einer Radlenkung, enthaltend einen zentralen Kern (2; 2'), der mit dem Fahrgestell (4) eines Fahrzeugs fest verbunden werden kann, sowie eine zum Kern koaxial ausgerichtete äußere Hülle (1; 1'), auf der das dem Rad abgewandten Ende des Stützarms fixiert werden kann, wobei ein Block aus elastischem Material (B; B') auf und zwischen den einander gegenüberliegenden Oberflächen des Kerns und der Hülle im zentralen Bereich des diese Oberflächen trennenden Zwischenraums befestigt ist und wobei dieser Block aus elastischem Material (B; B') in einer axialen Ebene zwei parallele oder nahezu parallele Vorsprünge (3; 3') aufweist, die auf der gemeinsamen Gelenkachse (Y-Y) geneigt sind und die einander gegenüberliegenden Oberflächen des Kerns und der Hülle miteinander verbinden,
dadurch gekennzeichnet, daß für jeden dieser Vorsprünge auf der Seite der Innenfläche der Hülle ein Anschlagelement (8a, 8b; 8'a, 8'b) vorgesehen ist, an der der Vorsprung (3; 3') mit dieser Innenfläche einen stumpfen Winkel bildet.

2. Gelenk nach Anspruch 1, dadurch gekennzeichnet, daß das elastische Material (B; B') in den jeweiligen stumpfwinkligen Bereichen mechanisch vorgespannt ist.

3. Gelenk nach Anspruch 1 oder 2, dadurch gekennzeichnet, daß jedes Anschlagelement (8a, 8b; 8'a, 8'b) jeweils in seiner Form einem steifen, in einem der beiden Enden der äußeren Hülle (1; 1') angebrachten Ring (5a, 5b; 5'a, 5'b) angepaßt ist.

4. Gelenk nach Anspruch 3, dadurch gekennzeichnet, daß wenigstens einer der Ringe (5a, 5b; 5'a, 5'b) durch eine an einem Ende der Hülle befindliche Einschnürung (7; 7') oder durch eine mechanische Befestigung in der Hülle (1; 1') fixiert ist.

5. Gelenk nach Anspruch 3 oder 4, dadurch gekennzeichnet, daß die Ringe (5a, 5b; 5'a, 5'b) die beiden Enden des zentralen Kerns (2; 2') so umgeben, daß ein Spiel (9) verbleibt, und dabei als radiale Anschlagelemente gegen radiale Relatiwerschiebungen zwischen dem zentralen Kern (2, 2') und der äußeren Hülle (1; 1') in der zuvor genannten axialen Ebene dienen.

6. Gelenk nach einem der Ansprüche 3 bis 5, dadurch gekennzeichnet, daß der zentrale Kern (2') in der zur genannten axialen Ebene senkrecht stehenden axialen Ebene zwei Absätze (10') aufweist, die zusammen mit den Ringen (5'a, 5'b) als Anschlagelemente gegen axiale Relatiwerschiebungen zwischen dem zentralen Kern (2') und der äußeren Hülle (1') dienen.

7. Gelenk nach einem der Ansprüche 3 bis 5, dadurch gekennzeichnet, daß die Ringe (5a, 5b) außerhalb der Hülle axiale Auskragungen (11) aufweisen, die zusammen mit den Wänden der den zentralen Kern (2) halternden Anordnung (4), als Anschlagelemente gegen axiale Relatiwerschiebungen zwischen dem zentralen Kern (2) und der äußeren Hülle (1) dienen.

8. Gelenk nach einem der vorangegangenen Ansprüche, dadurch gekennzeichnet, daß sich die schrägen Vorsprünge (3') des Blocks aus elastischem Material (B') jeweils auf einer schrägen Auflagefläche (13) des zentralen Kerns (2') abstützen, welche sich im wesentlichen in der zuerst genannten axialen Ebene und dabei quer zur allgemeinen Ausrichtung der Vorsprünge (3') erstreckt.

9. Gelenk nach einem der Ansprüche 6 bis 8, dadurch gekennzeichnet, daß der zentrale Kern (2") aus einer Röhre besteht, welche in einem mit Absätzen (10") versehenen Element befestigt ist, wobei die Absätze derart in Richtung der Gelenkachse abgeschrägt sind, daß die Dicke eines Kautschuküberzugs (12') erhöht werden kann.

10. Gelenk nach einem der vorangegangenen Ansprüche, dadurch gekennzeichnet, daß dessen Enden von zwei zwischen den Einschnürungen (7") und den als Anschlagelemente dienenden Ringen (5''a, 5"b) eingefügten Kautschuckscheiben (14a, 14b) abgedeckt werden, die mit den Enden des zentralen Kerns (2") verbunden sind.

## Claims

1. A self-steering resilient mount, in particular for an oscillating wheel support arm, the mount comprising a central core (2; 2') suitable for being secured to the structure (4) of a motor vehicle, and a coaxial outer case (1; 1') which can be held by the end of the support arm that is remote from the wheel, a block (B; B') of resilient material being bonded on and between the facing surfaces of said core and of said case, in the central zone of the space between said surfaces, in which mount said block (B ; B') of resilient material has in an axial plane two parallel or practically parallel branches (3; 3') that slope relative to the common axis (Y-Y) of the mount, and interconnecting said facing surfaces of the core and of the case, characterized in that a respective abutment (8a, 8b; 8'a, 8'b) is provided for each of the branches on the inside surface of said case, on that side of each of the branches (3; 3') that forms an obtuse angle with said surface.

2. A mount according to claim 1, characterized in that said resilient material (B; B') is subjected to prestress in the region of each of said obtuse angles.

3. A mount according to claim 1 or 2, characterized in that each of said abutments (8a, 8b; 8'a, 8'b) is formed on a rigid ring (5a, 5b; 5'a, 5'b) held inside a respective end of said outer case (1; 1').

4. A mount according to claim 3, characterized in that at least one of said rings (5a, 5b; 5'a, 5'b) is held inside the case (1; 1') by crimping an end thereof (7; 7') or by a mechanical connection.

5. A mount according to claim 3 or 4, characterized in that said rings (5a, 5b; 5'a, 5'b) surround the two ends of the central core (2; 2') with clearance (9), thereby creating radial abutments for relative radial displacement between the central core (2; 2') and the outer case (1; 1') in the above-mentioned axial plane.

6. A mount according to any one of claims 3 to 5, characterized in that in the axial plane perpendicular to said first-mentioned axial plane, said central core (2') has two shoulders (10') suitable for co-operating with said rings (5'a, 5'b) to constitute abutments for relative axial displacement between the central core (2') and the outer case (1').

7. A mount according to any one of claims 3 to 5, characterized in that said rings (5a, 5b) have axial projections (11) outside said case suitable for co-operating with the walls of a housing (4) for said central core (2) to form abutments for relative axial displacement between the central core (2) and the outer case (1).

8. A mount according to any preceding claim,
characterized in that each of said sloping branches (3') of the block (B') of resilient material bears against a sloping base (13) of said central core (2') extending generally in the first-mentioned axial plane transversely relative to the general direction of said branches (3').

9. A mount according to any one of claims 6 to 8,
characterized in that the central core (2") is constituted by a tube engaged in a part having shoulders (10"), which shoulders slope relative to the axis of the mount so as to enable the thickness of the rubber coating (12') to be increased.

10. A mount according to any preceding claim,
characterized in that its ends are closed by two rubber washers (14a, 14b) inserted between the reduced diameter portions (7") and the abutment rings (5"a, 5"b), said washers being engaged on the ends of the central core (2").
